# EUROPEAN PATENT APPLICATION

(11) **EP 4 818 265 A1**
(43) Date of publication of application: **07.10.2026**
(21) Application number: 24897104.6
(22) Date of filing: 09.10.2024
(51) Int. Cl.: C08L 101/00, C08J 5/00, C08L 1/00, D21H 11/00, D21H 25/04

(54) **RESIN COMPOSITE AND METHOD FOR PRODUCING RESIN COMPOSITE**

(30) Priority: 28.11.2023 JP 2023200325
(71) Applicant: Nippon Paper Industries Co., Ltd., Tokyo 114-0002 (JP); Kyoto Municipal Institute of Industrial Technology and Culture, Kyoto-shi, Kyoto 600-8815 (JP)
(72) Inventor: AGARI, Akira, Tokyo 114-0002 (JP); KAKUTA, Io, Tokyo 114-0002 (JP); FUKUDA, Yujiroh, Tokyo 114-0002 (JP); DATE, Takashi, Tokyo 114-0002 (JP); SEMBA, Takeshi, Kyoto-shi, Kyoto 600-8815 (JP); ITO, Akihiro, Kyoto-shi, Kyoto 600-8815 (JP); NOGUCHI, Hiroki, Kyoto-shi, Kyoto 600-8815 (JP); KITAGAWA, Kazuo, Kyoto-shi, Kyoto 600-8815 (JP)
(74) Representative: Kuhnen & Wacker Patent- und Rechtsanwaltsbüro PartG mbB
(86) International application number: PCT/JP2024/036075
(87) International publication number: WO 2025/115414

(57) **Abstract**

This resin composite comprises a thermoplastic resin and cellulose fibers, wherein a raw material of the main component of the cellulose fibers is low-basis-weight paper having a basis weight of 100 g/m² or lower after undergoing a drying step.

## Description

### Technical Field

The present invention relates to a resin composite and a method for producing the resin composite.

### Background Art

In a resin composite, mechanical strength (flexural modulus, flexural strength) and impact strength are in a trade-off relationship, and various studies have been conducted to solve the trade-off (see, for example, Patent Literatures 1 to 3). In Patent Literatures 1 and 2, a resin composite containing an inorganic filler is examined, and in Patent Literature 3, a resin composite containing a reinforcing fiber is examined; however, further improvement in performance is required. In addition, while the linear expansion coefficient is an important index for imparting dimensional stability in molding of a thermoplastic resin, a resin composite excellent in all of the mechanical strength, impact strength, and linear expansion coefficient, and a method for producing the same have not been established.

### Citation List

### Patent Literature

Patent Literature 1: JP 2009-62492 A
Patent Literature 2: WO 2018/135648 A
Patent Literature 3: WO 2019/208826 A

### Summary of Invention

### Technical Problem

An object of the present invention is to provide a resin composite and a method for producing the resin composite, in which the resin composite is excellent in the mechanical strength, impact strength, and linear expansion coefficient.

### Solution to Problem

As a result of intensive studies, the present inventors have found that the above object can be achieved by using a low basis weight paper having been subjected to a drying step, in particular, a tissue paper product for household use, such as a toilet paper, a facial tissue, or a wiper, and have completed the present invention. Specifically, the resin composite obtained by heating and kneading a cellulose fiber obtained from a low basis weight paper having been subjected to a drying step, and a thermoplastic resin can obtain such an effect that the mechanical strength (flexural modulus, flexural strength), impact strength, and linear expansion coefficient are excellent.

That is, the present invention provides the following.
(1) A resin composite containing a thermoplastic resin and a cellulose fiber, wherein a raw material of a main component of the cellulose fiber is a low basis weight paper having a basis weight of 100 g/m² or less after being subjected to a drying step.
(2) The resin composite according to (1), wherein the cellulose fiber is a pulverized product having been subjected to a pulverization treatment step.
(3) The resin composite according to (1) or (2), wherein the cellulose fiber is a pulverized product having an aerated bulk density in a range of 10 to 60 g/L.
(4) The resin composite according to (1) or (2), wherein the cellulose fiber is a pulverized product having a packed bulk density in a range of 15 to 80 g/L.
(5) The resin composite according to (1) or (2), wherein an aspect ratio retention rate represented by (an aspect ratio of the cellulose fiber of the pulverized product)/(an aspect ratio of the cellulose fiber before the pulverization treatment step) × 100(%) is 60% or more.
(6) The resin composite according to (1) or (2), wherein the low basis weight paper is a tissue paper having a basis weight of 3 to 40 g/m².
(7) The resin composite according to (1) or (2), wherein the low basis weight paper is a tissue paper for household use.
(8) The resin composite according to (1) or (2), wherein the thermoplastic resin is a polyolefin or a blend of a polyolefin and an elastomer, and has a flexural modulus of 1.00 GPa or more, an impact strength of 5.0 kJ/m² or more, and a linear expansion coefficient of 100×10⁻⁶/K or less.
(9) The resin composite according to (1) or (2), wherein the thermoplastic resin is a nylon or a blend of a nylon and an elastomer, having an impact strength of 3.0 kJ/m² or more.
(10) The resin composite according to (1) or (2), wherein the thermoplastic resin is a nylon or a blend of a nylon and an elastomer, and has a flexural modulus of 1.60 GPa or more, an impact strength of 2.0 kJ/m² or more, and a linear expansion coefficient of 70 × 10⁻⁶/K or less.
(11) The resin composite according to (1) or (2), wherein the thermoplastic resin is a polylactic acid or a blend of a polylactic acid and an elastomer, having an impact strength of 3.0 kJ/m² or more.
(12) The resin composite according to (1) or (2), wherein the thermoplastic resin is a polylactic acid or a blend of a polylactic acid and an elastomer, and has a flexural modulus of 3.50 GPa or more, an impact strength of 3.0 kJ/m² or more, and a linear expansion coefficient of 80 × 10⁻⁶/K or less.
(13) A method for producing a resin composite, including steps (A) to (C):
   step (A): subjecting a raw material pulp to a papermaking step and a drying step to obtain a low basis weight paper having a basis weight of 100 g/m² or less;
   step (B): subjecting the low basis weight paper having been subjected to the step (A) to a pulverization treatment; and
   step (C): mixing the low basis weight paper having been subjected to the pulverization treatment in the step (B) and a thermoplastic resin, and heating and kneading the mixture.
(14) The method for producing a resin composite according to (13), wherein the step (B) includes performing the pulverization treatment so that an aerated bulk density of the low basis weight paper is in a range of 10 to 60 g/L.
(15) The method for producing a resin composite according to (13) or (14), wherein the step (B) includes performing the pulverization treatment so that a packed bulk density of the low basis weight paper is in a range of 15 to 80 g/L.
(16) The method for producing a resin composite according to (13) or (14), wherein the step (B) includes performing the pulverization treatment so that an aspect ratio retention rate represented by (an aspect ratio of the low basis weight paper having been subjected to the pulverization treatment)/(an aspect ratio of the low basis weight paper before the pulverization treatment step) × 100(%) is 60% or more.

### Advantageous Effects of Invention

According to the present invention, a resin composite and a method for producing the resin composite, in which the resin composite is excellent in the mechanical strength (flexural modulus, flexural strength), impact strength, and linear expansion coefficient, can be provided.

### Description of Embodiments

Hereinafter, the resin composite and the method for producing the resin composite of the present invention will be described. The resin composite of the present invention is a resin composite containing a thermoplastic resin and a cellulose fiber, and a raw material of a main component of the cellulose fiber is a low basis weight paper having a basis weight of 100 g/m² or less after being subjected to a drying step.

The method for producing the resin composite of the present invention includes steps (A) to (C):
step (A): subjecting a raw material pulp to a papermaking step and a drying step to obtain a low basis weight paper having a basis weight of 100 g/m² or less,
   step (B): subjecting the low basis weight paper having been subjected to the step (A) to a pulverization treatment, and
step (C): mixing the low basis weight paper having been subjected to the pulverization treatment in the step (B) and a thermoplastic resin, and heating and kneading the mixture.

### (Cellulose fiber)

In the cellulose fiber to be used in the present invention, a main component is obtained from a low basis weight paper having been subjected to a drying step. In the present invention, the low basis weight paper having been subjected to a drying step may be subsequently crushed in a hydrated state.

In the present invention, a low basis weight paper having been subjected to a drying step is used, and a low basis weight paper having a basis weight of 100 g/m² or less is used. In general, the production of a paper includes paper production steps such as papermaking and coating for performing the production efficiently at a high speed, and a paper is produced through a multi-stage strong drying step, and a paper having been subjected to such a step tends to obtain rigid fibers having relatively many hydrogen bonding points between cellulose fibers. Meanwhile, in the production of a paper having a low basis weight, the production is often performed at a relatively low speed in order to prevent paper breakage, and it is possible to obtain cellulose fibers which have few hydrogen bonding points and are easily dispersed. It is considered that the inclusion of such fibers makes it easy for the fibers to disperse in a resin composite while the fibers remain long and thin with a high aspect ratio, thereby increasing the mechanical strength. In the present invention, it has been found that part of the problem is solved by forming a resin composite using such a paper having a low basis weight.

A method for producing such a low basis weight paper is not particularly limited, and the low basis weight paper can be obtained by allowing a papermaking raw material mainly containing plant fibers at a predetermined concentration to pass through a long net, a short net, or a circular net, making a web (wet paper), followed by dehydration by pressing, and further drying with various known dryers. In addition, the low basis weight paper may be produced by further being wound around a reel thereafter. Examples of such a paper include a tissue paper, a newsprint paper, printing papers such as a high quality paper, a medium quality paper, and a high quality rough paper, a wrapping paper, a moisture-proof paper, a backing paper for a wall paper, papers for processing such as a base paper for a paper container, a base paper for a laminated plate, and a base paper for molding applications, lightly coated papers such as an inkjet recording paper, a thermosensitive recording paper, a pressure-sensitive recording paper, and an art paper, a form paper, and a cardboard base paper, and in order to prevent aggregates in the resin composite, a paper without a coating layer or lamination is preferable. These papers can be used without particular limitation as long as the basis weight is 100 g/m² or less, and for example, commercially available papers can be used.

Further, it has been found that the effect is increased by using a tissue paper having a particularly low basis weight among the above-mentioned low basis weight papers. According to Handbook of Paper and Pulp (published in 1971), the tissue paper is a generic term for thin papers, and has a basis weight of 40 g/m² or less. The tissue paper has a further lower basis weight among the above-mentioned papers, and has a property that when a pulp contains foreign substances or contaminants, paper breakage or the like occurs, and papermaking is difficult. In addition, it is known that inclusion of an aggregate derived from a pulp in a resin composite triggers cracking during a strength test and reduces the impact strength. Since the tissue paper is a low basis weight paper, it is preferable to produce the tissue paper with less contamination with foreign substances or contaminants or aggregates in the production of the tissue paper, and the tissue paper is more suitable for the present invention, however, when the basis weight is too low, handleability is poor in papermaking, and thus the basis weight is preferably 3 to 40 g/m², and more preferably 5 to 30 g/m².

As a specific tissue paper, a household tissue paper, a glassine paper, a rice paper, an India paper, a base paper for a carbon paper, an office tissue paper, a condenser paper, a base paper for a carbonless paper, a base paper for a back carbon paper, a pressure-sensitive paper, a foil paper, a backing paper, an insulating paper, a release paper, a base paper for a hat body, a base paper for a paper fabric, a base paper for papermaking, a noodle bundling paper, an artificial silk scouring paper, a fruit wrapping paper, a transfer paper, a base paper for illustration, an air mail paper, a base paper for an artificial flower, a base paper for Mizuhiki, a base paper for Motoyui, a Tengujo paper, a Ganpishi paper, a Kyohana paper, a tea bag paper, or the like can be used.

Among these, a household tissue paper is more preferable because it contains less chemicals, fillers, and contaminants mixed in a pulp or in a papermaking step. Examples of the household tissue paper include a facial tissue, a toilet paper, a wiper, a low quality rough paper, a towel paper, a napkin paper, a table napkin paper, a laying paper for tempura, a bed sheet paper, a pillow cover paper, a nappy paper, a diaper paper, and a dress paper. In particular, a toilet paper, a facial tissue, and a wiper are preferable because the amount of chemicals and fillers to be used is small, and contamination with foreign substances and contaminants is strictly controlled in terms of hygiene, and a toilet paper is particularly preferable.

The toilet paper preferably conforms to the standard of JIS P 4501:2006, and particularly preferably has a basis weight of 18 g/m² or more, a bursting strength of 78 kPa or more, and particularly a degree of ease of loosening of 100 s or less as measured in accordance with the standard.

As a papermaking raw material of a paper to be used in the present invention, for example, a wood-based virgin pulp such as a softwood bleached kraft pulp (NBKP), a hardwood bleached kraft pulp (LBKP), or a softwood unbleached kraft pulp (NUKP), or a waste paper pulp regenerated from a waste paper can be used, and is preferable. In addition to the above, a wood pulp derived from a softwood or a hardwood can be used, and examples of a pulp derived from a non-wood plant include a straw pulp, a bagasse pulp, a reed pulp, a kenaf pulp, a linen pulp, a ramie pulp, a hemp pulp, a flax pulp, and a bamboo pulp. In the present invention, lignin may or may not be contained in the pulp, and a treatment for removing lignin may be performed in the production process, or a treatment for removing lignin may be performed for lignocellulose fibers. It is also possible to use plant-derived fibers that do not originally contain lignin. Further, for example, a dissolving pulp, a sulfite pulp, a kraft pulp, a semi-chemical pulp, a chemiground pulp, a refiner ground pulp, a thermomechanical pulp, a ground wood pulp, a refiner ground pulp, a thermomechanical pulp, or a fiberboard pulp may be used. A low basis weight paper can be obtained by performing a papermaking step and a drying step using such a pulp, but the above-mentioned pulps may be used alone or multiple types of pulps may be used in combination.

The type and the blending proportion of such a pulp can be adjusted and changed according to the quality required for various types of papers. In addition, various chemicals may be added (internally added) for the required quality and operation stability. Examples of such a chemical include a softener, a bulking agent, a dye, a dispersant, a wet paper strength enhancer, a dry paper strengthening agent, a water filtration improver, a pitch control agent, and a yield improver. In addition, these pulps may be bleached, and an intermediate product having been subjected to a drying step during production, specifically, a broke of paper or a process recycled paper can also be used.

The low basis weight paper according to the embodiment of the present invention can be produced by a known papermaking method. An example will be described below, but the present invention is not limited thereto. First, a papermaking raw material is supplied from a raw material tank and further diluted with white water to prepare a paper material. This paper material is sent to a stock inlet by a fan pump after degassing screening dust removal. From the stock inlet, a paper material in which fibers are well dispersed so as to be uniform and free of flocs (small lumps) and not to generate flow stripes is supplied onto a wire of a paper machine at an appropriate concentration, speed, and angle over the entire width of the wire. As the stock inlet, there are a head box installed open to the atmosphere at a high place, a pressurization type, a hydraulic type, and the like, and any of them may be adopted. Then, the paper material is jetted from the stock inlet between the wire and a felt to form a sheet (web, wet paper) on the felt.

The web formed between the wire and the felt is transferred in close contact with a Yankee dryer with a pressure roll. Subsequently, the web is dried by the Yankee dryer and a Yankee dryer hood, peeled off from the Yankee dryer while being subjected to a creping treatment by a creping doctor, and wound around a reel via a reel drum. The Yankee dryer is a drum made of cast iron or cast steel for drying a web and has an outer diameter of generally 2.4 to 6 m.

Here, creping is a method in which a paper is mechanically compressed in a vertical direction (machine traveling direction) to form wavy wrinkles called crepe, and is used to impart bulkiness (bulky texture), softness, water absorbency, surface smoothness, aesthetics (crepe shape), and the like particularly to a thin paper such as a toilet paper or a facial tissue among low basis weight papers. Then, crepe is formed by a creping doctor due to a speed difference between the Yankee dryer and the reel (reel speed ≤ Yankee dryer speed). The characteristics of the crepe depend on the speed difference, but when the basis weight of the base paper on the Yankee dryer is 7 to 40 g/m², the basis weight on the reel is approximately 9 to 50 g/m², which is larger than the basis weight on the Yankee dryer.

The crepe ratio based on the speed difference between the Yankee dryer and the reel is defined by the following equation. 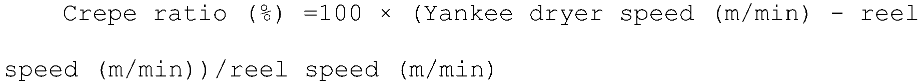 Crepe ratio (%) =100 × (Yankee dryer speed (m/min) - reel speed (m/min))/reel speed (m/min)

The quality of the crepe and the workability of the creping are almost determined by the crepe ratio, and in the present invention, the crepe ratio is preferably in the range of 10 to 50%.

In the present invention, the low basis weight paper having been subjected to a drying step is used as a cellulose raw material, but a pretreatment method for supplying the cellulose raw material to a kneader is not particularly limited. In addition, the pretreatment may be dry crushing or wet crushing, but is preferably performed in a wet manner. Crushing in a wet manner, that is, in a state of a hydrated sheet makes it possible to crush the paper to be used into a uniform size, and makes it easy to mix the paper with the thermoplastic resin in the subsequent step and to supply the low basis weight paper to a kneader. Further, it becomes easy to uniformly perform dispersion in the thermoplastic resin and defibration of the cellulose fiber to be used to a nanometer level performed in the kneader. Performing the dispersion and the defibration at a uniform level brings about an effect of further improving the mechanical strength and impact strength and reducing the linear expansion coefficient. As the crushing method, a known method can be used, and a jet mill, a roll mill, a ball mill, a cutter mill, a stone mill, an impact mill, a Dyno-mill an ultrasonic mill, a vibration mill, a Lodige mixer, a Henschel mixer, a household juicer mixer, a mortar, or the like can be used.

In addition, a modification treatment for imparting hydrophobicity to the cellulose fiber to be used in the present invention may be performed. In order to impart hydrophobicity, (1) a method in which various hydrocarbon groups and the like are introduced by subjecting a hydroxy group of cellulose to an etherification reaction, an esterification reaction, a dithioesterification reaction, or the like to directly hydrophobize the cellulose fiber, (2) a method in which an ionic functional group such as a carboxy group, a phosphate group, a phosphite group, or an amino group is introduced into a hydroxy group of cellulose by a reaction such as oxidation, etherification, esterification, or carbamation, and various hydrocarbon groups and the like are introduced through a direct ionic bond, an ionic bond via a metal ion or the like, or a covalent bond such as an amide bond or an ester bond to indirectly hydrophobize the cellulose, and the like are known. By such hydrophobization, the dispersibility in the resin composite is improved, and various physical properties such as mechanical strength are improved, but there is a concern that the degree of crystallinity may decrease, the number of steps may increase, VOC may be generated when the compound or the like used in the modification treatment remains, or the like.

In the present invention, the effect is exhibited even without using the modified cellulose fiber, but in order to adjust the physical properties, the cellulose fiber derived from a low basis weight paper having been subjected to a drying step may be subjected to a modification treatment and used.

In the present invention, a high basis weight paper other than a low basis weight paper having been subjected to a drying step or a pulp dried without being subjected to a papermaking step can be used for the cellulose fiber as long as the effect of the present invention is not impaired, but in order to prevent aggregates in the resin composite, a paper without a coating layer, lamination or the like is preferable. In addition, as for the blending proportion, such a material can be blended at 49 mass% or less of the entire cellulose fiber, but preferably at 33 mass% or less.

In the present invention, the low basis weight paper having been subjected to the drying step may be subjected to a pulverization treatment. Also, the low basis weight paper having been subjected to the drying step may be subjected to crushing in a hydrated state and then subjected to a pulverization treatment. By performing the pulverization treatment, the transport workability in the production of the resin composite is improved, and aggregates and the like derived from the cellulose fiber in the resin composite are suppressed, so that a resin composite having good physical properties can be obtained.

In the present invention, the pulverization refers to a step of fine pulverization to about primary particles by applying a strong cutting force, and is clearly distinguished from the disintegration (coarse crushing to about secondary aggregates for loosening the low basis weight paper) described below.

The method for performing the pulverization treatment is not particularly limited, and for example, the pulverization treatment can be performed using a pulverizer. Examples of the pulverizer include a dry pulverizer and a wet pulverizer.

Examples of the dry pulverizer include a cutting mill, an impact mill, an airflow mill, and a medium mill. These may be used alone or in combination of two or more, or may be processed in several stages using a plurality of the same models.

Examples of the cutting mill include a mesh mill (manufactured by Horai Co., Ltd.), ATOMS (manufactured by YAMAMOTO HYAKUMA MFG. CO., LTD.), a knife mill (manufactured by Pallmann Industries), a granulator (manufactured by Herbold Meckesheim GmbH), and a rotary cutter mill (manufactured by Nara Machinery Co., Ltd.).

Examples of the impact mill include a pulverizer (manufactured by Hosokawa Micron Corporation), a fine ipact mill (manufactured by Hosokawa Micron Corporation), a super micron mill (manufactured by Hosokawa Micron Corporation), a sample mill (manufactured by SEISHIN ENTERPRISE Co., Ltd.), a bantam mill (manufactured by SEISHIN ENTERPRISE Co., Ltd.), an atomizer (manufactured by SEISHIN ENTERPRISE Co., Ltd.), a tornado mill (NIKKISO CO., LTD.), a turbo mill (Turbo Kogyo Co., Ltd.), and a bevel impactor (manufactured by AIKAWA Iron Works Co., Ltd).

Examples of the airflow mill include a CGS jet mill (manufactured by Mitsui Mining Co., Ltd.), a jet mill (manufactured by Sansho Industry Co., Ltd.), an Ebara jet micronizer (manufactured by Ebara Corporation), a Ceren-Miller (manufactured by MASUKO SANGYO CO., LTD.), and a supersonic jet mill (manufactured by Nippon Pneumatic Mfg. Co., Ltd.).

Examples of the medium mill include a vibration ball mill.

Examples of the wet pulverizer include a masscolloider (manufactured by MASUKO SANGYO CO., LTD.), a high-pressure homogenizer (manufactured by SANMARU MACHINERY CO., LTD.), and a medium mill. Examples of the medium mill include a bead mill (manufactured by IMEX Co., Ltd.).

The aerated bulk density of a pulverized product having been subjected to the pulverization treatment step is preferably in the range of 10 to 60 g/L, more preferably 10 to 40 g/L, and still more preferably 10 to 30 g/L.

Here, the aerated bulk density can be measured, for example, by the following method.

To eliminate fiber aggregation, about 50 g of the above pulverized product is put in a prepared bag, air is blown to disassemble the fibers (30 seconds), 700 cc of the pulverized product is dropped into a 1000 cc measuring cylinder, and the weight is measured. The above operation is performed three times, and the average value of the measured weights is taken as the aerated bulk density.

When the aerated bulk density is within the above range, it is possible to prevent the pulverized product from formation of lumps during transportation in the production of the resin composite, and it is possible to make it easier to fill the cellulose fiber uniformly and evenly at the time of the resin composite is made.

The packed bulk density of the pulverized product having been subjected to the pulverization treatment step is preferably in the range of 15 to 80 g/L, more preferably 15 to 60 g/L, and still more preferably 15 to 50 g/L.

Here, the packed bulk density can be measured, for example, by the following method.

To eliminate fiber aggregation, about 50 g of the above pulverized product is put in a prepared bag, air is blown to disassemble the fibers (30 seconds), and the pulverized product is dropped to 1200 cc (to the limit where there is no scale using twice the amount of measurement as a guideline) in a 1000 cc measuring cylinder. Then, the measuring cylinder is fixed in the air, and the bottom is tapped 150 times with the palm at a pace of 250 times/minute. Thereafter, the pulverized product is removed to the scale of 600 cc of the measuring cylinder, and the weight is measured. The above operation is performed three times, and the average value of the measured weights is taken as the packed bulk density.

When the packed bulk density is within the above range, it is possible to prevent the pulverized product from formation of lumps of during transportation under pressure in the production of the resin composite, and it is possible to make it easier to fill the cellulose fiber uniformly and evenly at the time of the resin composite.

With respect to the pulverized product having been subjected to the pulverization treatment step, the aspect ratio retention rate represented by 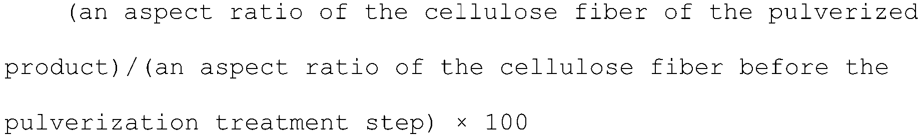 (an aspect ratio of the cellulose fiber of the pulverized product)/(an aspect ratio of the cellulose fiber before the pulverization treatment step) × 100 is preferably 60% or more, and the upper limit thereof is only required to be 100% or less, and is preferably 99% or less, more preferably 95% or less, and still more preferably 93% or less.

Here, the aspect ratio can be determined by 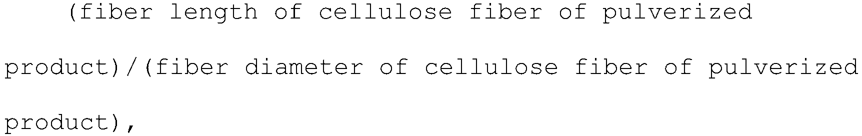 (fiber length of cellulose fiber of pulverized product)/(fiber diameter of cellulose fiber of pulverized product), and the fiber length and the fiber diameter can be determined, for example, by performing measurement with a fiber tester.

In the present invention having a pulverization step, by adjusting the aspect ratio retention rate to the above range, a reduction in the mechanical strength, impact strength, linear expansion coefficient, and the like due to shortening of the cellulose fiber can be suppressed, and the object of the present invention is easily achieved.

### (Thermoplastic resin)

The thermoplastic resin to be used in the present invention is a resin having an impact strength of preferably a predetermined value or more (for example, 10 kJ/m² or more in the case of a polyolefin, and 3.0 kJ/m² or more in the case of a polyamide or an aliphatic polyester) in a resin alone or a resin mixture containing no cellulose fiber to be used, and is not particularly limited as long as it is such a resin, and a polyamide, a polyolefin, an aliphatic polyester, an aromatic polyester, a polyacetal, a polycarbonate, a polystyrene, an acrylonitrile-butadiene-styrene copolymer (ABS resin), a polycarbonate-ABS alloy (PC-ABS alloy), a modified polyphenylene ether (m-PPE), or the like can be preferably used.

In addition, these thermoplastic resins may be subjected to a chemical treatment such as acid modification or chlorination.

As the polyamide (PA), polyamide 6(Nylon 6, PA6), polyamide 66 (Nylon 66, PA66), polyamide 610 (PA610), polyamide 612 (PA612), polyamide 11 (PA11), polyamide 12 (PA12), polyamide 46, polyamide XD10 (PAXD10), polyamide MXD6 (PAMXD6), or the like can be preferably used.

As the polyolefin, polypropylene (PP), polyethylene (PE (HDPE, MDPE, or LDPE)), a copolymer of ethylene and propylene, or the like can be preferably used. Further, polyisobutylene, polyisoprene, polybutadiene, or the like can also be preferably used.

As the polypropylene (PP), isotactic polypropylene (iPP), syndiotactic polypropylene (sPP), or the like can be preferably used.

As the aliphatic polyester, a polymer or a copolymer of a diol and an aliphatic dicarboxylic acid such as succinic acid or valeric acid (for example, polybutylene succinate (PBS)), a polyhydroxyalkanoate derived from a microorganism or the like (for example, a copolymer of 3-hydroxybutyrate and 3-hydroxyhexanoate (PHBH)), a homopolymer or a copolymer of a hydroxycarboxylic acid such as glycolic acid or lactic acid (for example, polylactic acid (PLA), poly-ε-caprolactone (PCL), or the like), a copolymer of a diol, an aliphatic dicarboxylic acid, and the hydroxycarboxylic acid, or the like can be preferably used.

As the aromatic polyester, a polymer of a diol such as ethylene glycol, propylene glycol, or 1,4-butanediol and an aromatic dicarboxylic acid such as terephthalic acid, or the like can be preferably used. Specifically, for example, polyethylene terephthalate (PET), polypropylene terephthalate (PPT), polybutylene terephthalate (PBT), or the like can be preferably used.

As the polyacetal (also referred to as polyoxymethylene, POM), in addition to a homogeneous polymer of paraformaldehyde, a copolymer of paraformaldehyde and oxyethylene can also be preferably used.

As the polycarbonate (PC), a reaction product of bisphenol A or a bisphenol which is a derivative thereof and phosgene or phenyl dicarbonate can be preferably used.

As the polystyrene (PS), in addition to general-purpose PS (GPPS), PS (HIPS) in which a rubber component is dispersed in a PS matrix to improve impact resistance, or a copolymer of styrene (an acrylonitrile-butadiene-styrene copolymer or an ABS resin) can be suitably used.

The PC-ABS alloy can be suitably used in terms of excellent impact resistance, weather resistance, and molding processability. In addition, as m-PPE, a blended product of PPE and PS (PPE-PS blended product) has high heat resistance and is lightweight, and thus can be suitably used.

Further, as the thermoplastic resin other than the above, for example, polyvinyl chloride, polyvinylidene chloride, a fluororesin, a (meth)acrylic resin, (thermoplastic) polyurethane, a vinyl ether resin, a polysulfone-based resin, a cellulose-based resin (for example, triacetylated cellulose, diacetylated cellulose, acetylbutyl cellulose, or the like), a copolymer of polystyrene and acrylonitrile (AS resin), a resin having biodegradability other than the above such as PHA, PBSA, or PBAT, polysulfone, polyethersulfone, polyphenylene sulfide, polyarylate, polyamideimide, polyetherimide, a polyetherketone, polyimide, a liquid crystal polymer, a fluororesin, or the like can also be used.

These thermoplastic resins preferably have an impact strength of a predetermined value or more in the case of a thermoplastic resin alone or when two or more types are blended, and may be copolymers of each of the thermoplastic resins. At that time, the copolymer of the copolymer is not particularly limited, but it is preferable to use a polyolefin such as polyethylene, polypropylene, or polybutene, polyamide 6 (Nylon 6, PA6), polylactic acid (PLA), or the like from the viewpoint that an impact strength is easily exhibited. Here, when a polyolefin is used as the thermoplastic resin, the impact strength is preferably 10 kJ/m² or more, and when polyamide 6 (Nylon 6, PA6) or polylactic acid (PLA) is used as the thermoplastic resin, the impact strength is preferably 3.0 kJ/m² or more. When the impact strength of the resin to serve as the base itself is low, an elastomer described below may be blended to set the impact strength of the entire thermoplastic resin to a predetermined value or more (for example, 10 kJ/m² or more in the case of an elastomer containing a polyolefin, and 3.0 kJ/m² or more in the case of an elastomer containing a polyamide or an aliphatic polyester).

In the present invention, as the elastomer, the following materials can be used. For example, natural rubber, chloroprene rubber, ethylene-propylene-non-conjugated diene copolymer rubber, ethylene-butene-1 copolymer rubber, ethylene-hexene copolymer rubber, ethylene-octene copolymer rubber, polybutadiene, styrene-butadiene block copolymer rubber, styrene-butadiene copolymer rubber, partially hydrogenated styrene-butadiene-styrene block copolymer rubber, styreneisoprene block copolymer rubber, partially hydrogenated styreneisoprene block copolymer rubber, polyurethane rubber, styrene-grafted-ethylene-propylene-non-conjugated diene copolymer rubber, styrene-grafted-ethylene-propylene copolymer rubber, styrene/acrylonitrile-grafted-ethylene-propylene-non-conjugated diene copolymer rubber, styrene/acrylonitrile-grafted-ethylene-propylene copolymer rubber, chlorosulfonated polyethylene rubber, silicone rubber, ethylene-vinyl acetate rubber, epichlorohydrin rubber, polysulfide rubber, metallocene catalyzed polyethylene, metallocene-catalyzed ethylene-propylene-non-conjugated diene copolymer rubber, and the like are exemplified. One of these elastomers can be used alone or two or more of these elastomers can be used in combination. Further, rubber that can be used in a liquid form such as latex rubber can also be used.

In the present invention, when the elastomer contained in the resin is added, the elastomer is preferably blended within a range that does not impair the characteristics of the thermoplastic resin, that is, the relationship among the mechanical strength, the impact strength, and the linear expansion coefficient, and preferably in an amount of 50 mass% or less, more preferably 30 mass% or less, and preferably 8 mass% or more, and more preferably 13 mass% or more with respect to the resin composite. When the blending amount is large, the mechanical strength is less improved, and when the blending amount is small, the impact strength is less improved. Further, the elastomer may be added alone together with the thermoplastic resin at the time of heating and kneading described later, or may be added as a thermoplastic resin-elastomer blend formed in advance.

In the present invention, a compatibilizing resin may be added together with the cellulose fiber and the thermoplastic resin. The compatibilizing resin works to enhance uniform mixing and adhesion of the cellulose fiber and the thermoplastic resin. As the compatibilizing resin used in the present invention, a polymer resin having a low molecular weight dicarboxylic acid capable of forming an acid anhydride such as carboxylic acid, maleic acid, succinic acid, or glutaric acid on a polyolefin chain such as polypropylene or polyethylene, a polymer resin having a primary amine, a secondary amine, an amide, or the like on a polyolefin chain such as polypropylene or polyethylene, a polymer resin having a silanol group or the like on a polyolefin chain such as polypropylene or polyethylene, and the like are known, and for example, in the case of use in a polyolefin resin, a resin containing, as a main component, maleic anhydride-modified polypropylene (MAPP) or maleic anhydride-modified polyethylene (MAPE), to which maleic acid that easily interacts with a hydroxy group of cellulose is added, or the like is preferably used.

The addition amount of the compatibilizing resin having the above-mentioned characteristics is preferably 5 to 100 mass%, and more preferably 10 to 50 mass% with respect to the amount of cellulose. When the addition amount exceeds 100 mass%, the effect of the present invention is not exhibited due to selfaggregation of molecules of the compatibilizing resin.

As the compatibilizing resin, one type may be used alone, or two or more types may be used as a mixed resin. In the case of use as a graft body of one type or two or more types of polymers and a polyolefin, the base resin constituting the graft body is not particularly limited, but polyethylene, polypropylene, polybutene, or the like can be used from the viewpoint that the graft body is easily produced.

Further, the impact strength of the thermoplastic resin used in the present invention is preferably a predetermined value or more. Specifically, when a polyolefin is used as the thermoplastic resin, the impact strength is preferably 10 kJ/m² or more, more preferably 18 kJ/m² or more; when polyamide 6 (Nylon 6, PA6) is used as the thermoplastic resin, the impact strength is preferably 3.0 kJ/m² or more, more preferably 4.0 kJ/m²; and when polylactic acid (PLA) is used as the thermoplastic resin, the impact strength is preferably 3.0 kJ/m² or more, more preferably 4.0 kJ/m². Here, the impact strength in the present invention is a value measured by an Izod impact test (ISO 180) or a Charpy impact strength test (ISO 179-1). For example, the Izod impact test can be performed using an Izod impact tester (manufactured by Toyo Seiki Seisaku-sho, Ltd.) after producing a strip-shaped test piece (10 mm × 80 mm × 4 mm) of a thermoplastic resin or a thermoplastic resin-elastomer blend using an injection molding machine. Specifically, a cut (notch) having a depth of 2 mm is formed in a central portion of the test piece, a hit is given on the notch side using a hammer with an appropriate energy, a crack is developed from the notch, and the impact strength thereof can be calculated. The larger the value of the impact strength is, the better the impact strength is.

In addition, the impact strength of the thermoplastic resin can be determined by measuring a resin composite obtained by mixing and blending components other than the cellulose fiber. When the impact strength of the resin or the elastomer alone to be used is known, the impact strength can be determined by a weighted average of the impact strength value of a main thermoplastic resin accounting for 67 mass% or more as the mass of the thermoplastic resin.

In addition, in the present invention, depending on various applications, it may be used in combination with a filler other than the cellulose fiber, such as a mineral-based filler such as talc, calcium carbonate, titanium oxide, or glass beads, or a fiber-based filler such as whiskers, glass fibers, carbon fibers, aramid fibers, or carbon nanotubes. The content proportion is not particularly limited as long as the effect of the present invention is not impaired, and is preferably, for example, 0.01 to 10 mass% in the resin composite.

The resin composite of the present invention may contain an optional additive as necessary in addition to the thermoplastic resin or the blend of a thermoplastic resin and an elastomer, and the cellulose fiber. Examples of the optional additive include a low molecular weight compatibilizer, a surfactant, starches, polysaccharides such as alginic acid, natural proteins such as gelatin, glue, and casein, tannin, inorganic compounds such as zeolite, a ceramic, and a metal powder, a viscosity modifier, a colorant, a plasticizer, a pigment, a dye, an antistatic agent, an ultraviolet absorber, an antioxidant, a light stabilizer, and a flame retardant. The content proportion of the optional additive is not particularly limited as long as the effect of the present invention is not impaired, and is preferably, for example, 0.01 to 10 mass% in the resin composite.

### (Production of resin composite)

The resin composite of the present invention is obtained by heating and kneading the above thermoplastic resin, the cellulose fiber, and the optional additive used as necessary.

Here, in order to exhibit the expected effect in the present invention, it is important that the resin composite is in a close-packed state in which the cellulose fiber in an amount corresponding to the target thermoplastic resin are uniformly and evenly packed therein, and the structure is made uniform and the structural defects are reduced. Therefore, the blending ratio of the thermoplastic resin to the cellulose fiber is not uniformly determined because it is also related to the impact strength of the thermoplastic resin to be used and the degree of fiber defibration, but for example, while the effect is exhibited with a small addition part number by nanosizing the entire cellulose fiber, the impact strength is improved by sufficiently adding the cellulose fiber even when the cellulose fiber are not very strongly defibrated. The production can be performed by setting the blending ratio of the thermoplastic resin to the cellulose fiber to 97 : 3 to 20 : 80 in mass ratio in the resin composite, preferably 89 : 11 to 40 : 60, and more preferably 87 : 13 to 49 : 51, and a resin composite excellent in mechanical strength, impact strength, and linear expansion coefficient can be obtained. Even when the cellulose is not defibrated to a nano level, the effect is exhibited when the amount of the cellulose fiber is 16 mass% or more in the resin composite, and the effect can be further exhibited when the amount of the cellulose fiber is 21 mass% or more. The amount of the cellulose fiber exceeding 51 mass% is not preferable because fluidity during molding is lowered, moldability is lowered, and various molding defects occur, but when the cellulose fiber is contained in a large amount, convenience during transportation and economic efficiency are increased. Therefore, when the cellulose fiber is used as a masterbatch of the cellulose fiber used in the present invention, the cellulose fiber may be used as a high-concentration blend containing cellulose in an amount of 51% or more. In addition, it has been found that the impact strength is improved by using a thermoplastic resin having a high impact strength even with the same addition part number of cellulose fiber, and it is possible to adjust the balance among the mechanical properties, the impact strength, and the linear expansion coefficient to be required finally.

The heating temperature can be adjusted in accordance with the melting point of the thermoplastic resin to be used. The heating temperature is preferably the lowest processing temperature recommended by the thermoplastic resin supplier ± about 10°C. By setting the heating temperature to this temperature range, it is possible to uniformly mix the thermoplastic resin and the cellulose fiber, and further, an optional additive.

The heating and kneading time may be adjusted in consideration of the production amount within the range in which the performance of the apparatus and the operating conditions such as rotation speed are recommended by the kneader manufacturer. It is preferable that the heating time is short because deterioration due to heat and oxidation during heating and kneading can be prevented, but when the heating time is short, dispersion in the resin may be insufficient. Therefore, in the heating and kneading, it is preferable to include a configuration of intensifying kneading such as a rotor or a kneader in a screw piece, and in particular, it is more preferable to use rotors in a plurality of places because nanodefibration can be promoted.

In addition, in order to prevent deterioration due to heating and oxidation during heating and kneading, it is preferable to add an additive such as an antioxidant and perform kneading in a nitrogen atmosphere.

As the kneader, a single-screw or multi-screw kneader can be used, but a twin-screw kneader is preferable.

Further, in the present invention, the entire amount of the thermoplastic resin, the cellulose fiber, and an optional additive to be used as necessary may be supplied to the kneader at one time or multiple times. In the case of supplying at multiple times, a side feeder or the like may be used.

In order to obtain the resin composite, the number of processing times in the kneader is not particularly limited, but in the case of processing a plurality of times, the same material may be kneaded a plurality of times, and further in the case of processing a plurality of times, production is performed with a high concentration of the cellulose fiber ranging from 30 to 80% in the first processing, and the thermoplastic resin, the cellulose fiber, and an optional additive to be used as necessary may be added every time the processing is repeated so that the resin composite to be finally obtained falls within the scope of the present invention.

As the cellulose fiber to be used in the present invention, any of the cellulose fiber obtained by dry-pulverizing a low basis weight paper having been subjected to a drying step before kneading, the cellulose fiber obtained by wet-pulverizing a low basis weight paper in a hydrated state before pulverization, and the cellulose fiber obtained by dry-pulverizing a low basis weight paper, followed by hydration can be used. Use in a dry method is economical because an existing facility for general resin kneading can be used, but use in a hydrated state promotes nanodefibration during kneading, so that a higher quality resin composite can be produced.

Prior to heating and kneading the thermoplastic resin and the cellulose fiber, it is also possible to mix both materials in advance. For example, (i) a crushed product of a low basis weight paper in a dry state having been subjected to a drying step and the thermoplastic resin are mixed, and the obtained mixture can also be supplied to the kneader. Alternatively, (ii) each of a crushed product of a low basis weight paper having been subjected to a drying step and the thermoplastic resin in a powder or granular form is dispersed in a dispersion liquid in which these do not dissolve, and then mixed, and dried, and the resultant can also be supplied to the kneader. Further, examples of the mixing means in this case include means using a bench roll, a Banbury mixer, a kneader, a planetary mixer, a Lodige mixer, a Henschel mixer, a stirrer with a stirring blade, or a revolution- or rotation-type stirrer.

In the case of the above (i), it is also possible to add an optional additive when the crushed product of a low basis weight paper having been subjected to a drying step and the thermoplastic resin in a powder or granular form are mixed in advance before heating and kneading.

### (Molded Body)

The resin composite of the present invention can be used as a molded body processed into a desired shape. When a molded body is produced, a material obtained by processing the resin composite of the present invention into various shapes such as a pellet shape, a flake shape, a powder shape, a sheet shape, a plate shape, and a film shape can be used as a molding material.

Examples of the molding method include injection molding, die molding, extrusion molding, blow molding, vacuum pressure molding, and molding with a 3D printer. It is also possible to perform molding involving physical or chemical foaming. Examples of the shape of the molded body include a sheet shape, a plate shape, a film shape, and a three-dimensional structure. Molded bodies having various shapes according to applications can be produced by the molding method described above. Use of the resin composite of the present invention can provide a molded body excellent in mechanical strength (bending elastic modulus and bending strength), impact strength, and linear expansion coefficient. That is, when the thermoplastic resin to be used is a polyolefin, for example, a molded body having a bending elastic modulus of 1.0 GPa or more, an impact strength of 5.0 kJ/m² or more, and a linear expansion coefficient of 100 × 10⁻⁶/K or less can be obtained. Further, when the thermoplastic resin to be used is nylon 6 (PA6), for example, a molded body having a bending elastic modulus of 1.60 GPa or more, an impact strength of 2.0 kJ/m² or more, and a linear expansion coefficient of 70 × 10⁻⁶/K or less can be obtained. Further, when the thermoplastic resin to be used is polylactic acid (PLA), for example, a molded body having a bending elastic modulus of 3.50 GPa or more, an impact strength of 3.0 kJ/m² or more, and a linear expansion coefficient of 80 × 10⁻⁶/K or less can be obtained.

That is, when the thermoplastic resin to be used is a polyolefin, the resin composite of the present invention obtained as described above and a molded body obtained from the resin composite of the present invention preferably have a bending elastic modulus of 1.00 GPa or more, an impact strength of 5.0 kJ/m² or more, and a linear expansion coefficient of 100 × 10⁻⁶/K or less, more preferably have a bending elastic modulus of 1.6 GPa or more, an impact strength of 9.5 kJ/m² or more, and a linear expansion coefficient of 60 × 10⁻⁶/K or less, still more preferably have a bending elastic modulus of 1.8 GPa or more, an impact strength of 10.0 kJ/m² or more, and a linear expansion coefficient of 50 × 10⁻⁶/K or less, and particularly preferably have a bending elastic modulus of 2.0 GPa or more, an impact strength of 10.5 kJ/m² or more, and a linear expansion coefficient of 40 × 10⁻⁶/K or less. Further, in addition thereto, the bending strength is preferably 25 MPa or more, more preferably 30 MPa or more, and still more preferably 35 MPa or more. Further, the specific gravity is preferably less than 1.4.

Further, when the thermoplastic resin to be used is nylon 6 (PA6), the resin composite of the present invention obtained as described above and a molded body obtained from the resin composite of the present invention preferably have a bending elastic modulus of 1.60 GPa or more, an impact strength of 2.0 kJ/m² or more, and a linear expansion coefficient of 70 × 10⁻⁶/K or less, and more preferably have a bending elastic modulus of 3.00 GPa or more, an impact strength of 2.0 kJ/m² or more, and a linear expansion coefficient of 70 × 10⁻⁶/K or less. Further, in addition thereto, the bending strength is preferably 90 MPa or more, and more preferably 100 MPa or more. Further, the specific gravity is preferably less than 1.4.

Further, when the thermoplastic resin to be used is polylactic acid (PLA), the resin composite of the present invention obtained as described above and a molded body obtained from the resin composite of the present invention preferably have a bending elastic modulus of 3.50 GPa or more, an impact strength of 3.0 kJ/m² or more, and a linear expansion coefficient of 80 × 10⁻⁶/K or less, and more preferably have a bending elastic modulus of 4.00 GPa or more, an impact strength of 3.05 kJ/m² or more, and a linear expansion coefficient of 70 × 10⁻⁶/K or less. Further, in addition thereto, the bending strength is preferably 105 MPa or more. Further, the specific gravity is preferably less than 1.4.

The bending elastic modulus and the bending strength can be measured, for example, as follows.

That is, a strip-shaped test piece (10 mm × 80 mm × 4 mm) is produced by an injection molding machine (model: NPX7, manufactured by NISSEI PLASTIC INDUSTRIAL CO., LTD., clamping force: 7 tons) using the resin composite of the present invention. Specifically, the resin composite is melted by setting the cylinder temperature of the injection molding machine to 170°C (supply part) to 190°C (weighing part), and injected into a mold at a temperature of 35°C to prepare a molded body. The obtained test piece is allowed to stand in an atmosphere at a temperature of 23°C and a relative humidity of 50% for 1 day, and then tested by the following test method.

In a test method, for example, the test piece is subjected to a strength test using a universal testing machine (model: AG5000E, manufactured by Shimadzu Corporation) under test conditions of a distance between fulcrums of 64 mm and a test speed of 10 mm/min, and a bending elastic modulus and a bending strength are obtained. The larger the values of the bending elastic modulus and the bending strength are, the better the mechanical strength is.

Further, the impact strength is a value measured by an Izod impact test (ISO 180) or a Charpy impact strength test (ISO 179-1). For example, the Izod impact test can be performed using an Izod impact tester (manufactured by Toyo Seiki Seisaku-sho, Ltd.) after preparing a strip-shaped test piece (10 mm × 80 mm × 4 mm) of the resin composite of the present invention using an injection molding machine. Specifically, a cut (notch) having a depth of 2 mm is formed in a central portion of the test piece, a hit is given on the notch side using a hammer with an appropriate energy, a crack is developed from the notch, and the impact strength thereof can be calculated. The larger the value of the impact strength is, the better the impact strength is.

The linear expansion coefficient is a linear expansion coefficient between 30 and 50°C at which the linear expansion coefficient often becomes the largest in a PP-based material when the resin composite of the present invention is heated from 0°C to 100°C, and can be measured under the conditions specified in ASTM D696. The smaller the value of the measured linear expansion coefficient is, the better the dimensional stability is.

The specific gravity can be measured by a gas replacement method using AccuPyc II manufactured by Micromeritics Instruments Corporation.

The molded body produced from the resin composite of the present invention can be used in fields where mechanical strength, impact strength, and linear expansion coefficient are required. Specifically, the molded body can be used for interior materials, exterior materials, structural materials, and the like of transportation equipment such as automobiles, trains, ships, and airplanes; housings, structural materials, internal components, and the like of electrical appliances such as personal computers, televisions, telephones, and clocks; housings, structural materials, internal components, and the like of mobile communication devices such as mobile phones; housings, structural materials, internal components, and the like of portable music reproducing equipment, video reproducing equipment, printing equipment, copying equipment, sporting goods, and the like; building materials; office supplies such as stationery, vessels, containers, and the like.

### Examples

Hereinafter, the present invention will be described in more detail with reference to examples and comparative examples, but the present invention is not limited to these examples. In addition, in the following, the term "part(s)" is on a mass basis unless otherwise specified.

### <Measurement method and evaluation method>

In examples and comparative examples, measurement and evaluation were performed as follows.

### (Measurement of basis weight of paper)

### · Measurement of basis weight of paper used

The basis weight of a paper used in each of examples and comparative examples was measured by the following method. A paper whose area was measured in advance was dried overnight in an oven at 105°C, and then allowed to stand in a desiccator containing a sufficient amount of silica gel for 30 minutes, and then the mass was measured. The measured mass was divided by the area to calculate the basis weight.

### (Mechanical strength test (three-point bending test))

### · Method for producing test piece (molded body)

A strip-shaped test piece (10 mm × 80 mm × 4 mm) was produced by an injection molding machine (model: NPX7, manufactured by NISSEI PLASTIC INDUSTRIAL CO., LTD., clamping force: 7 tons) using the resin composite of each of examples and comparative examples. Specifically, the resin composite was melted by setting the cylinder temperature of the injection molding machine to 170°C (supply part) to 190°C (weighing part), and injected into a mold at a temperature of 35°C to prepare a molded body. The obtained test piece was allowed to stand in an atmosphere at a temperature of 23°C and a relative humidity of 50% for 1 day, and then tested.

### · Test Methods

The test piece was subjected to a strength test using a universal testing machine (model: AG5000E, manufactured by Shimadzu Corporation). The test was performed under test conditions of a distance between fulcrums of 64 mm and a test speed of 10 mm/min, and a bending elastic modulus and a bending strength were obtained. The larger the values of the bending elastic modulus and the bending strength are, the better the mechanical strength is.

### (Izod impact test)

A strip-shaped test piece (10 mm × 80 mm × 4 mm) was produced by an injection molding machine (model: NPX7, manufactured by NISSEI PLASTIC INDUSTRIAL CO., LTD., clamping force: 7 tons) using the resin composite of each of examples and comparative examples, and subjected to an Izod impact test using an Izod impact tester (manufactured by Toyo Seiki Seisaku-sho, Ltd.) Specifically, a cut (notch) having a depth of 2 mm was formed in a central portion of the test piece. A hit was given on the notch side using a hammer with an appropriate energy, a crack was developed from the notch, and the impact strength thereof was calculated. The larger the value is, the better the impact strength is.

In addition, an Izod impact test was similarly performed also for a thermoplastic resin or a blend of a thermoplastic resin and an elastomer containing no cellulose fiber used for the production of the resin composite.

### (Linear expansion coefficient)

A linear expansion coefficient (or referred to as a linear thermal expansion coefficient) between 30 and 50°C at which the linear thermal expansion coefficient often becomes the largest in a PP-based material when a sample is heated from 0°C to 100°C was measured under the conditions specified in ASTM D696. The smaller the value is, the better the dimensional stability is.

### (Specific gravity)

The specific gravity was measured by a gas replacement method using AccuPyc II manufactured by Micromeritics Instruments Corporation.

### (Aerated bulk density)

To eliminate fiber aggregation, about 50 g of the above pulverized product was put in a prepared bag, air was blown to disassemble the fibers (30 seconds), 700 cc of the pulverized product was dropped into a 1000 cc measuring cylinder, and the weight was measured. The above operation was performed three times, and the average value of the measured weights was taken as the aerated bulk density.

### (Packed bulk density)

To eliminate fiber aggregation, about 50 g of the above pulverized product was put in a prepared bag, air was blown to disassemble the fibers (30 seconds), and the pulverized product was dropped to 1200 cc (to the limit where there was no scale using twice the amount of measurement as a guideline) in a 1000 cc measuring cylinder. Then, the measuring cylinder was fixed in the air, and the bottom was tapped 150 times with the palm at a pace of 250 times/minute. Thereafter, the pulverized product was removed to the scale of 600 cc of the measuring cylinder, and the weight was measured. The above operation was performed three times, and the average value of the measured weights was taken as the packed bulk density.

### (Fiber length, fiber diameter, and aspect ratio)

The fiber length and the fiber diameter were determined by performing measurement with a fiber tester (L & W Fiber Tester Plus (manufactured by Lorentzen & Wettre)). The aspect ratio was determined by $\left(fiber length\right) / \left(fiber diameter\right) .$

### (Transport workability of cellulose fiber)

Using a twin-screw kneader (manufactured by Technovel Corporation, screw diameter φ15 mm, L/D 45 (L/D is the ratio of screw length L to screw diameter D)) having a feeder, each of the cellulose fiber obtained in Examples and Comparative Example was charged into the feeder from a raw material charging port.

The transportability of the cellulose fiber in the horizontal direction when the operation was performed under the condition of a feeder flow rate of 0.06 kg/h was visually observed.

Further, the cellulose fiber transported to the reaction section was charged into the upper part of the screw, and the charging operation of the cellulose fiber was also visually observed at a screw rotation speed of 200 rpm during the operation, and evaluated according to the following criteria.

Good: In visual observation for 10 minutes, there was no occurrence of clogging of cellulose fibers in both the transportability in the feeder and the charging workability in the reaction section, and the transport workability was good.

Poor: In visual observation for 10 minutes, clogging of cellulose fibers or the like was observed in either the transportability in the feeder or the charging workability in the reaction section, and the transport workability was poor.

### <Production of resin composite>

### (Example 1)

A roll-shaped product of toilet paper (Kleenex manufactured by NIPPON PAPER CRECIA CO., LTD., basis weight: 21 g/m²) as the cellulose fiber was pulverized by setting a screen diameter of a pulverizer (UC-360, manufactured by Horai Co., Ltd.) to φ2 mm to obtain a pulverized product 1.

Then, 27 parts of the pulverized product 1 obtained by the above pulverization treatment based on dry mass, 68 parts of polypropylene (PP; Prime Polypro J-466HP manufactured by Prime Polymer Co., Ltd.), and 5 parts of maleic anhydride-modified polypropylene (MAPP; TOYO-TAC H1000P manufactured by TOYOBO CO., LTD.) as a compatibilizing resin were added, and the mixture was stirred with a Henschel mixer to obtain a disintegrated product.

The disintegrated product was supplied to a twin-screw kneader (manufactured by Technovel Corporation, screw diameter φ15 mm, L/D 45 (L/D is the ratio of screw length (L) to screw diameter (D)), rotors were used at three places in the screw configuration) without being dried, and heated and kneaded to obtain 100 parts of a resin composite. The temperature of the cylinder of the twin-screw kneader was 160°C. The impact strength of the thermoplastic resin containing no cellulose fiber was 80 kJ/m².

A strip-shaped test piece was prepared using the obtained resin composite, and subjected to the mechanical strength test, the Izod impact test, and the linear expansion coefficient measurement. The results are shown in Table 1.

### (Example 2)

A pulverized product 2 was obtained by performing pulverization in the same manner as in Example 1, except that the toilet paper at the time of pulverization was changed from a roll-shaped product to a Henschel disintegrated product.

Here, the Henschel disintegrated product was obtained by treating a toilet paper (manufactured by NIPPON PAPER CRECIA CO., LTD., Kleenex, basis weight: 21 g/m²) twice with a Henschel mixer (manufactured by NIPPON COKE & ENGINEERING CO., LTD., FM150 type) at 20 m/s for 2 minutes and subsequently at 80 m/s for 2 minutes.

A resin composite was obtained in the same manner as in Example 1, except that the pulverized product 1 was changed to the pulverized product 2.

A strip-shaped test piece was prepared using the obtained resin composite, and subjected to the mechanical strength test, the Izod impact test, and the linear expansion coefficient measurement. The results are shown in Table 1.

### (Example 3)

A pulverized product 3 was obtained by performing pulverization in the same manner as in Example 2, except that the screen diameter at the time of performing pulverization was changed to φ20 mm. A resin composite was obtained in the same manner as in Example 2, except that the pulverized product 2 was changed to the pulverized product 3.

A strip-shaped test piece was prepared using the obtained resin composite, and subjected to the mechanical strength test, the Izod impact test, and the linear expansion coefficient measurement. The results are shown in Table 1.

### (Comparative Example 1)

27 parts of the Henschel disintegrated product of the above-mentioned toilet paper were prepared based on dry mass, 68 parts of polypropylene (PP; Prime Polypro J-466HP manufactured by Prime Polymer Co., Ltd.) and 5 parts of maleic anhydride-modified polypropylene (MAPP; TOYO-TAC H1000P manufactured by TOYOBO CO., LTD.) as a compatibilizing resin were added, and the mixture was stirred with a Henschel mixer to obtain a disintegrated product. Water was not added.

The disintegrated product was supplied to a twin-screw kneader (manufactured by Technovel Corporation, screw diameter φ15 mm, L/D 45 (L/D is the ratio of screw length (L) to screw diameter (D)), rotors were used at three places in the screw configuration) without being dried, and heated and kneaded to obtain 100 parts of a resin composite. The temperature of the cylinder of the twin-screw kneader was 160°C. The impact strength of the thermoplastic resin containing no cellulose fiber was 80 kJ/m².

A strip-shaped test piece was prepared using the obtained resin composite, and subjected to the mechanical strength test, the Izod impact test, and the linear expansion coefficient measurement. The results are shown in Table 1.

**[Table 1]**

| | | Number of parts of raw material of cellulose fiber and components blended (100 parts in total) (PP/MAPP/elastomer/cellulose fiber) | Basis weight of cellulose fiber(g/m ²) | Aerated bulk density of cellulose fiber( g /L) | Packed bulk density of cellulose fiber(g/L) | Aspect ratio retention rate of cellulose fiber(%) | Impact strength of blend of thermoplastic resin containing no cellulose fiber and elastomer (k J /m²) | Transport workability of cellulose fiber | Resin composite | | | | |
|---|---|---|---|---|---|---|---|---|---|---|---|---|---|
| | | | | | | | | | Flexural modulus (GPa) | Flexural strength (MPa) | Izod impact strength (kJ/m²) | Linear expansion coefficient (×10⁻⁶/K) | Density (g/cm³) |
| Example 1 | Pulverization ϕ 2 mm only | Toilet paper (kleenex toilet, manufactured by NIPPON PAPER CRECIA CO., LTD.) | 21 | 28.4 | 46.2 | 65% | 80 | Good | 2.1 | 47.5 | 8.2 | 59.4 | 1.01 |
| | | PP68/MAPP5/elastomer0/cellulose fiber27 | | | | | | | | | | | |
| Example 2 | Disintegration + pulverization *ϕ* 2 mm | Toilet paper (kleenex toilet, manufactured by NIPPON PAPER CRECIA CO., LTD.) | 21 | 20.5 | 33.6 | 74% | 80 | Good | 2.1 | 48.2 | 7.9 | 48.8 | 1.02 |
| | | PP68/MAPP5/elastomer0/cellulose fiber27 | | | | | | | | | | | |
| Example 3 | Disintegration + pulverization ϕ 20 mm | Toilet paper (kleenex toilet, manufactured by NIPPON PAPER CRECIA CO., LTD.) | 21 | 12.4 | 21.1 | 92% | 80 | Good | 2.2 | 48.8 | 7.7 | 56.2 | 1.01 |
| | | PP68/MAPP5/elastomer0/cellulose fiber27 | | | | | | | | | | | |
| Comparative Example 1 | Disintegration treatment only | Toilet paper (kleenex toilet, manufactured by NIPPON PAPER CRECIA CO., LTD.) | 21 | 7.8 | 14.7 | - | 80 | Poor | 2.1 | 48.3 | 7.7 | 50.1 | 1.02 |
| | | PP68/MAPP5/elastomer0/cellulose fiber27 | | | | | | | | | | | |

As shown in Table 1, a resin composite containing a thermoplastic resin and a cellulose fiber, in which a raw material of a main component of the cellulose fiber is a low basis weight paper having a basis weight of 100 g/m² or less after being subjected to a drying step is excellent in the mechanical strength test, the Izod impact test, and the linear expansion coefficient measurement, and particularly when the cellulose fiber is a pulverized product further subjected to a pulverization treatment step, the resin composite is further excellent in the transport workability.

## Claims

1. A resin composite comprising a thermoplastic resin and a cellulose fiber, wherein a raw material of a main component of the cellulose fiber is a low basis weight paper having a basis weight of 100 g/m² or less after being subjected to a drying step.

2. The resin composite according to claim 1, wherein the cellulose fiber is a pulverized product having been subjected to a pulverization treatment step.

3. The resin composite according to claim 1 or 2, wherein the cellulose fiber is a pulverized product having an aerated bulk density in a range of 10 to 60 g/L.

4. The resin composite according to claim 1 or 2, wherein the cellulose fiber is a pulverized product having a packed bulk density in a range of 15 to 80 g/L.

5. The resin composite according to claim 1 or 2, wherein an aspect ratio retention rate represented by 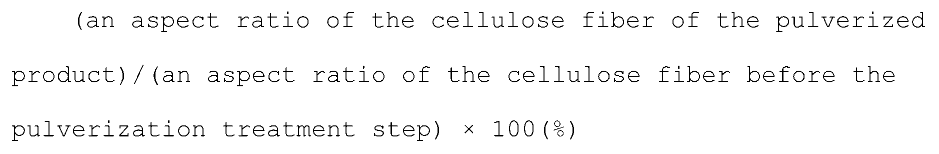 (an aspect ratio of the cellulose fiber of the pulverized product)/(an aspect ratio of the cellulose fiber before the pulverization treatment step) × 100(%) of the cellulose fiber is 60% or more.

6. The resin composite according to claim 1 or 2, wherein the low basis weight paper is a tissue paper having a basis weight of 3 to 40 g/m².

7. The resin composite according to claim 1 or 2, wherein the low basis weight paper is a tissue paper for household use.

8. The resin composite according to claim 1 or 2, wherein the thermoplastic resin is a polyolefin or a blend of a polyolefin and an elastomer, and has a flexural modulus of 1.00 GPa or more, an impact strength of 5.0 kJ/m² or more, and a linear expansion coefficient of 100 × 10⁻⁶/K or less.

9. The resin composite according to claim 1 or 2, wherein the thermoplastic resin is a nylon or a blend of a nylon and an elastomer, having an impact strength of 3.0 kJ/m² or more.

10. The resin composite according to claim 1 or 2, wherein the thermoplastic resin is a nylon or a blend of a nylon and an elastomer, and has a flexural modulus of 1.60 GPa or more, an impact strength of 2.0 kJ/m² or more, and a linear expansion coefficient of 70 × 10⁻⁶/K or less.

11. The resin composite according to claim 1 or 2, wherein the thermoplastic resin is a polylactic acid or a blend of a polylactic acid and an elastomer, having an impact strength of 3.0 kJ/m² or more.

12. The resin composite according to claim 1 or 2, wherein the thermoplastic resin is a polylactic acid or a blend of a polylactic acid and an elastomer, and has a flexural modulus of 3.50 GPa or more, an impact strength of 3.0 kJ/m² or more, and a linear expansion coefficient of 80 × 10⁻⁶/K or less.

13. A method for producing a resin composite, comprising steps (A) to (C):
step (A): subjecting a raw material pulp to a papermaking step and a drying step to obtain a low basis weight paper having a basis weight of 100 g/m² or less;
step (B): subjecting the low basis weight paper having been subjected to the step (A) to a pulverization treatment; and
step (C): mixing the low basis weight paper having been subjected to the pulverization treatment in the step (B) and a thermoplastic resin, and heating and kneading the mixture.

14. The method for producing a resin composite according to claim 13, wherein the step (B) comprises performing the pulverization treatment so that an aerated bulk density of the low basis weight paper is in a range of 10 to 60 g/L.

15. The method for producing a resin composite according to claim 13 or 14, wherein the step (B) comprises performing the pulverization treatment so that a packed bulk density of the low basis weight paper is in a range of 15 to 80 g/L.

16. The method for producing a resin composite according to claim 13 or 14, wherein the step (B) comprises performing the pulverization treatment so that an aspect ratio retention rate represented by 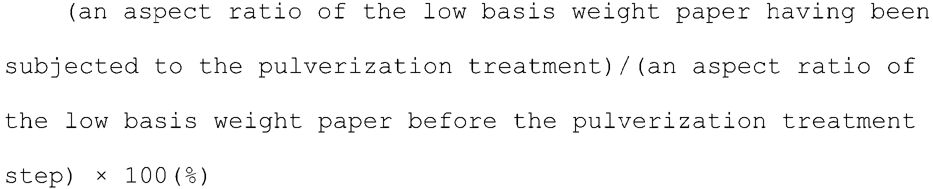 (an aspect ratio of the low basis weight paper having been subjected to the pulverization treatment)/(an aspect ratio of the low basis weight paper before the pulverization treatment step) × 100(%) is 60% or more.
